Europäisches Patentamt

European Patent Office

Office européen des brevets

(11) Publication number: **0 072 605**
A2

## EUROPEAN PATENT APPLICATION

(21) Application number: **82300737.2**

(22) Date of filing: **15.02.82**

(51) Int. Cl.³: **F 02 B 31/00**
F 02 B 27/00, F 01 L 3/06

(30) Priority: **14.08.81 ZA 815619**

(43) Date of publication of application:
**23.02.83 Bulletin 83/8**

(84) Designated Contracting States:
**AT BE CH DE FR GB IT LI NL SE**

(71) Applicant: **Pillman, Ami François**
**52a Kloof Road**
**Bedfordview Transvaal(ZA)**

(72) Inventor: **Pillman, Ami François**
**52a Kloof Road**
**Bedfordview Transvaal(ZA)**

(74) Representative: **Warden, John Christopher et al,**
**R.G.C. Jenkins & Co. 12-15, Fetter Lane**
**London EC4A 1PL(GB)**

(54) Internal combustion engine induction assembly.

(57) The invention relates to an induction assembly for internal combustion engines, and more particularly to the induction passage thereof. The induction passage is substantially parallel to the axis of the inlet valve and includes vanes which controls the air stream direction. In the preferred embodiment the induction passage is co-axial with the valve.

"INTERNAL COMBUSTION ENGINE INDUCTION ASSEMBLY"

-1-

THIS INVENTION relates to the induction assembly for internal combustion engines.

It is well known that the induction assembly for internal combustion engines has a substantial influence on the fuel combustion and overall efficiency of operation of such engines. Much design work has been done over the years to obtain induction of air into the combustion chambers of this type of engine in a manner which will cause proper and controlled mixing of fuel and air in the combustion chamber prior to ignition.

Diesel engines are particularly susceptible to poor operation where proper mixing of fuel and air is not obtained. Special swirl chambers and swirl ports have been developed along with directional induction of air into the cylinders in order to obtain efficient performance of these engines. Accurate and consistent manufacture of cylinder head assemblies to obtain the desired results is essential. This is very seldom, if ever, easily accomplished because the castings of cylinder heads is inherently complex in order to provide adequate cooling passages for the cylinder heads as well as the curved induction passages usually encountered in these constructions.

According to the present invention there is provided an induction assembly for combustion engines wherein the induction passage is substantially parallel to the axis of the inlet valve and include vanes controlling the air stream direction.

Further features of this invention provide for the induction passage to be co-axial with the valve, for the passage to be parallel with the cylinder axis and for the vanes to be carried either on the valve or the inner wall of the induction passage or to be part of an integral component including the valve and part of the induction passage made to reciprocate with the valve.

The invention also provides for the induction passage to be straight and designed to give a ram effect through pressure waves induced in the induction passages during operation of the engine.

An example of this invention is illustrated diagrammatically in the accompanying drawings in which:-

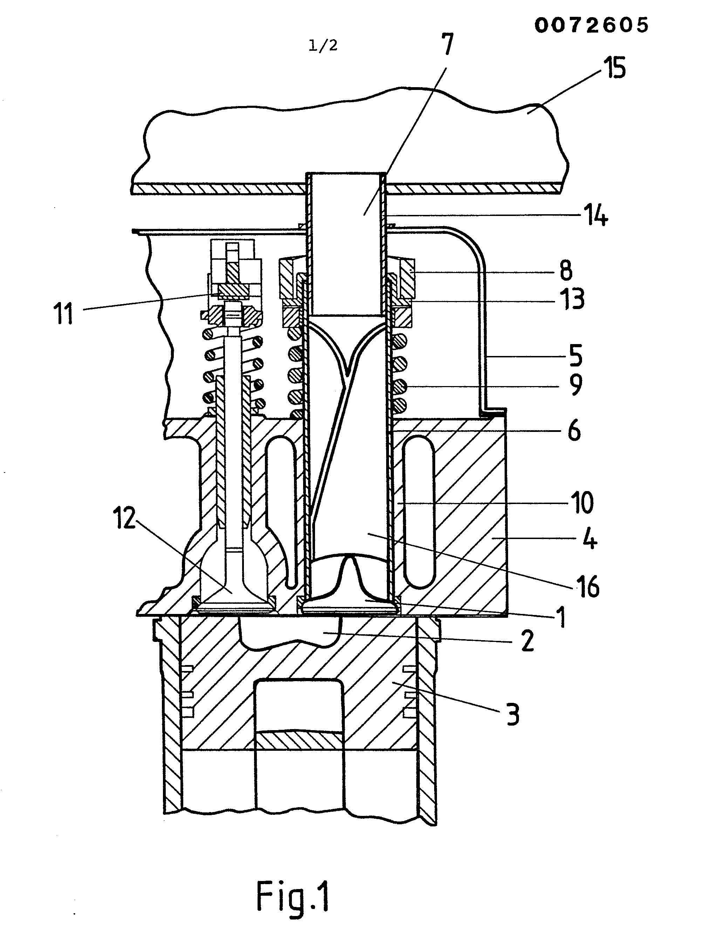

Fig. 1 is a section side elevation of the inlet valve assembly, and

Fig. 2 is a plan of the view shown in Fig. 1.

The example illustrated and described below is adapted for use with a diesel engine.

As illustrated the inlet valve 1 opens vertically into the combustion chamber 2 formed in the piston head 3. The valve is housed in a cylinder head assembly 4 fitted with a tappet cover 5 in known manner.

The valve 1 is, in this example, shown integral with a tubular member 6 forming part of an induction passage 7 which is co-axial with the valve. The member 6 is adapted to reciprocate with the valve under the influence of the rocker arm assembly 8 and compression spring 9 in a guide 10 formed in the cylinder head assembly 4.

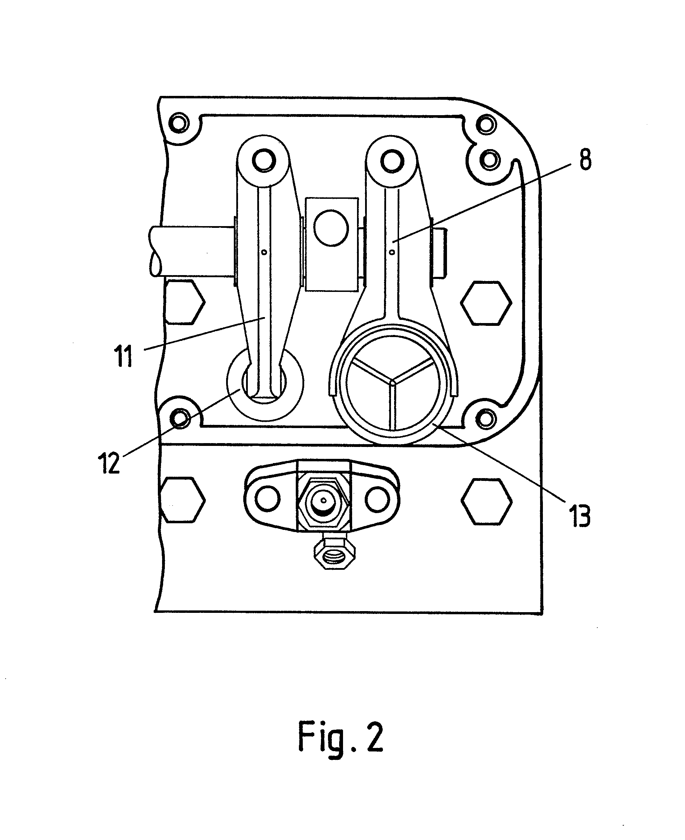

As can be seen in Fig. 2 the rocker arm assembly 8 for this inlet valve is different from that 11 for the exhaust valve 12. The rocker arm of assembly 8 is bifurcated at the end thereof, associated within the inlet, and operates on the ring 13 on member 6, which ring 13 may form part of the compression spring 9 retaining means.

The upper end of tubular member 6 moves on a fixed section 14 of the induction passage which passes in sealing engagement through the tappet cover 5. The tubular member 6 will slide on the section 14 in a manner which will prevent air being drawn into the cylinder from the space under the tappet cover between the relatively moveable parts. An inlet manifold in the form of a large air filter 15 is fitted to the outer end of the induction passages 7. These passages are made to a length which can be designed to enable a ram effect to be obtained and naturally increase the amount of air induced into the cylinder during operation of the engine.

The most important parts of the induction assembly are vanes 16 fixed to the valve 1 and/or tubular member 6 and shaped to control the direction of air flow into the cylinder of the engine which cylinder has its axis parallel to that of the valve 1. It will be appreciated that the vanes 16 can be designed to give any desired swirl to the air induced through the passage 7 into the engine cylinder. In particular it will be appreciated that the vanes can be made to gradually increase the amount of swirl imparted to the induced air along the length of the vanes.

With the assembly above described it has been found that many advantages arise both in the manufacture and operation of the engine. Among these are the simplification of the casting of the cylinder head and improved facilities for providing passages for coolant through the cylinder head. It is also far easier to obtain uniform construction for all the cylinders of the engine. In operation a high volumetric efficiency is obtained enhanced, if desired, by the ram effect mentioned above. The construction is considerably simpler than the majority of engines presently in use.

It will be appreciated that many variations can be made to the particular assembly above described without departing from the scope of the invention. For example, the induction passage need not be co-axial with the valve but the vanes shaped to cause swirling motion of the air into the cylinders. Also the valve need not be made integral with the tubular member but may be made to reciprocate therein. This latter construction will require more complicated sealing arrangements to prevent air being induced from beneath the tappet cover.

CLAIMS:

1. An induction assembly for combustion engines wherein the induction passage is substantially parallel to the axis of the inlet valve and includes vanes controlling the air stream direction.

2. An induction assembly as claimed in claim 1 in which the induction passage is co-axial with the valve.

3. An induction assembly as claimed in either preceeding claim in which the induction passage is parallel with the cylinder axis.

4. An induction assembly as claimed in any one of the preceeding claims in which the vanes are carried on the valve.

5. An induction assembly as claimed in any one of claims 1 to 3 in which the vanes are carried on the inner wall of the induction passage.

6.  An induction assembly as claimed in any preceeding claim in which the valve and part of the induction passage are an integral component.

7.  An induction assembly as claimed in claim 6 in which the vanes are integral with the said intergral component.

8.  An induction assembly as claimed in any preceeding claim in which the induction passage is straight and designed to give a ram effect through pressure waves induced in the induction passages during operation of the engine.

Fig.1

0072605

Fig. 2